(19) **Europäisches Patentamt / European Patent Office / Office européen des brevets**

(11) **EP 4 700 468 A1**

(12) **EUROPEAN PATENT APPLICATION**
published in accordance with Art. 153(4) EPC

(43) Date of publication:
**25.02.2026 Bulletin 2026/09**

(21) Application number: **23938427.4**

(22) Date of filing: **23.05.2023**

(51) International Patent Classification (IPC):
**G02F 1/39** $^{(2006.01)}$

(52) Cooperative Patent Classification (CPC):
**G02F 1/39**

(86) International application number:
**PCT/JP2023/019036**

(87) International publication number:
**WO 2024/241456 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **HIROSAWA, Kenichi**
  **Tokyo 100-8310 (JP)**
• **NISHIDA, Mio**
  **Tokyo 100-8310 (JP)**
• **OHATA, Nobuo**
  **Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(54) **TERAHERTZ WAVE GENERATION DEVICE**

(57) A terahertz wave generating device is designed in such a manner as to include: a pulsed light source (1) that outputs pulsed light; a first nonlinear crystal (4) that converts the pulsed light output from the pulsed light source (1) into signal light and idler light, and outputs the converted signal light and the converted idler light; an etalon (5) that transmits a plurality of light beams having frequencies different from each other, having been given the converted signal light and the converted idler light from the first nonlinear crystal (4); and a second nonlinear crystal (6) that generates terahertz waves having a frequency corresponding to a frequency difference between light beams among the plurality of light beams transmitted through the etalon (5).

FIG. 1

**Description**

**TECHNICAL FIELD**

The present disclosure relates to a terahertz wave generating device.

**BACKGROUND ART**

There are terahertz wave generating devices that generate terahertz waves.

As such a terahertz wave generating device, Non-Patent Literature 1 discloses a terahertz wave generating device including a pulse laser, an optical parametric oscillator, a nonlinear crystal, and a rotation angle adjusting mechanism, for example.

The optical parametric oscillator includes two potassium titanate phosphate crystals (hereinafter referred to as the "KTP crystals") to generate two near-infrared light pulses from a pulse generated by the pulse laser. The difference in wavelength between the two near-infrared light pulses is determined by the rotation angles of the respective KTP crystals. Of the two near-infrared light pulses, one near-infrared light pulse is signal light, and the other near-infrared light pulse is idler light. The nonlinear crystal generates terahertz waves having a frequency corresponding to the wavelength difference between the two near-infrared light pulses, being given the two near-infrared light pulses from the optical parametric oscillator.

To cause the nonlinear crystal to generate terahertz waves of a single frequency, each of the line widths of the two near-infrared light pulses needs to be a narrow line width. To allow the optical parametric oscillator to generate near-infrared light pulses of narrow line widths, the quality factor (Q factor) of the optical parametric oscillator for the idler light is set to a high Q factor.

The rotation angle adjusting mechanism is a mechanism for adjusting the rotation angle of each KTP crystal.

**CITATION LIST**

**NON-PATENT LITERATURE**

Non-Patent Literature 1: K. Miyamoto et al., "Optimized terahertz-wave generation using BNA-DFG", Vol. 17, Opt. Express, August 2009, pp. 14832

**SUMMARY OF INVENTION**

**TECHNICAL PROBLEM**

In the terahertz wave generating device disclosed in Non-Patent Literature 1, the Q factor drops only with a slight change in the angle of the mirror that forms the optical parametric oscillator. For this reason, the terahertz wave generating device has the problem of being weak against environmental changes such as vibration or temperature changes.

The present disclosure has been made to solve the above problem, and has an object to obtain a terahertz wave generating device that is more resistant to environmental changes than the terahertz wave generating device disclosed in Non-Patent Literature 1.

**SOLUTION TO PROBLEM**

A terahertz wave generating device according to the present disclosure includes: a pulsed light source to output pulsed light; a first nonlinear crystal to convert the pulsed light output from the pulsed light source into signal light and idler light, and output the signal light and the idler light; an etalon to transmit a plurality of light beams having frequencies different from each other when receiving the signal light and the idler light from the first nonlinear crystal; and a second nonlinear crystal to generate a terahertz wave having a frequency corresponding to a frequency difference between light beams among the plurality of light beams transmitted through the etalon.

**ADVANTAGEOUS EFFECTS OF INVENTION**

According to the present disclosure, a terahertz wave generating device that is more resistant to environmental changes than the terahertz wave generating device disclosed in Non-Patent Literature 1 is obtained.

**BRIEF DESCRIPTION OF DRAWINGS**

FIG. 1 is a configuration diagram showing a terahertz wave generating device according to a first embodiment. FIGS. 2A and 2B are explanatory diagrams each illustrating an example configuration of an etalon 5.

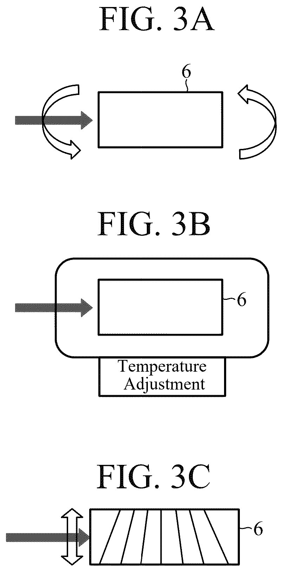

FIG. 3A is an explanatory diagram illustrating an example of a phase matching adjusting mechanism 9 that adjusts phase matching in a second nonlinear crystal 6 by changing the angle of the second nonlinear crystal 6, using a rotating stage or the like. FIG. 3B is an explanatory diagram illustrating an example of the phase matching adjusting mechanism 9 that adjusts phase matching in the second nonlinear crystal 6 by controlling the temperature of the second nonlinear crystal 6. FIG. 3C is an explanatory diagram illustrating an example of the phase matching adjusting mechanism 9 that adjusts phase matching in the second nonlinear crystal 6 by changing the position at which incident light enters, using a linear motion stage.

FIG. 4 is an explanatory diagram showing the transmittance of the etalon 5, where $R_1 = R_2 = 0.15$, $L_e = 150$ $\mu$m, and n = 1.0.

FIG. 5 is an explanatory diagram showing the phase mismatch amount in a case where a $\beta$-barium borate (BBO) crystal in which phase matching is achieved with excitation light of 1064 nm and signal light of 1550 nm is used as a first nonlinear crystal 4, the cut angle of the BBO crystal is 25.75 degrees, and the crystal length is represented by $L_c$.

FIGS. 6A and 6B are explanatory diagrams each illustrating an example of a resonator.

FIG. 7 is a configuration diagram showing a terahertz wave generating device according to a second embodiment.

FIG. 8 is a configuration diagram showing a terahertz wave generating device according to a third embodiment.

FIG. 9 is a configuration diagram showing a terahertz wave generating device according to a fifth embodiment.

**DESCRIPTION OF EMBODIMENTS**

To explain the present disclosure in greater detail, modes for carrying out the disclosure are described below with reference to the accompanying drawings.

First Embodiment

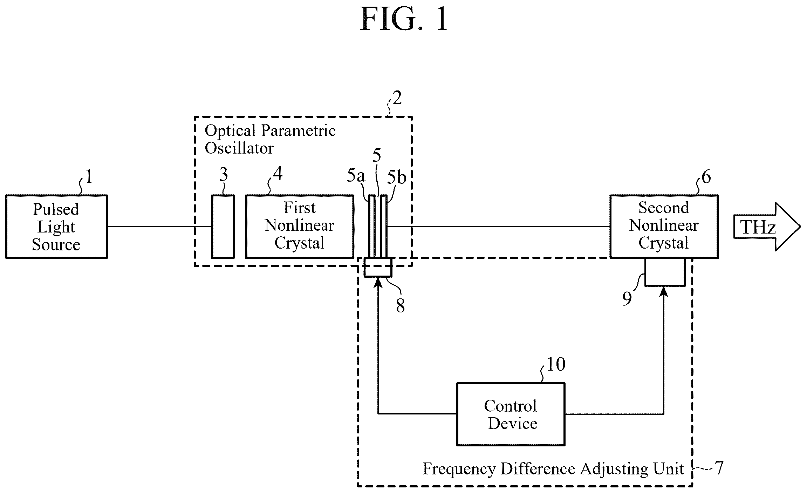

FIG. 1 is a configuration diagram showing a terahertz wave generating device according to a first embodiment.

The terahertz wave generating device shown in FIG. 1 includes a pulsed light source 1, an optical parametric oscillator 2, a second nonlinear crystal 6, and a frequency difference adjusting unit 7.

The pulsed light source 1 oscillates pulsed light, and outputs the pulsed light to the optical parametric oscillator 2.

The wavelength of the pulsed light to be oscillated by the pulsed light source 1 is not limited to any particular wavelength. However, high peak power is required to generate terahertz waves. Therefore, 1064 nm, at which high peak power is easily obtained, is used as the wavelength of the pulsed light to be oscillated by the pulsed light source 1, for example.

Although the wavelength of the pulsed light to be oscillated by the pulsed light source 1 may be in a wavelength band other than 1064 nm, there is a case where stimulated Brillouin scattering occurs when terahertz waves are generated. In such a case, the pulsed light source 1 oscillates a pulse having a pulse width of 1 ns or smaller with which stimulated Brillouin scattering does not occur.

Since high peak power is required, the pulsed light source 1 may include an amplifier.

The optical parametric oscillator 2 includes a dichroic mirror 3, a first nonlinear crystal 4, and an etalon 5.

The dichroic mirror 3 transmits the pulsed light output from the pulsed light source 1 to the side of the first nonlinear crystal 4, and reflects the signal light converted by the first nonlinear crystal 4 to the side of the first nonlinear crystal 4.

The characteristics of the dichroic mirror 3 with respect to idler light converted by the first nonlinear crystal 4 may have any appropriate characteristics. However, in a case where the optical parametric oscillator 2 is a resonator that resonates with both the signal light and the idler light, it tends to be unstable unless the resonator length of the optical parametric oscillator 2 is precisely controlled. Therefore, it is easier to handle the idler light by transmitting the idler light. In view of this, in the terahertz wave generating device illustrated in FIG. 1, the dichroic mirror 3 transmits the idler light to the side of the pulsed light source 1.

The first nonlinear crystal 4 is formed with a lithium niobate (LiNbO₃) crystal, a beta barium borate ($\beta$-BaB$_2$O$_4$) crystal, or a quasi-phase-matched lithium niobate (periodically poled lithium niobate: PPLN) crystal, for example.

The first nonlinear crystal 4 converts the pulsed light transmitted through the dichroic mirror 3 into signal light and idler light.

The first nonlinear crystal 4 is disposed at such an angle that excitation light that is the pulsed light transmitted through the dichroic mirror 3 and the signal light satisfy phase matching.

The first nonlinear crystal 4 outputs the converted signal light and the converted idler light to the etalon 5.

The etalon 5 includes a first partially reflecting mirror 5a and a second partially reflecting mirror 5b to resonate the converted signal light output from the first nonlinear crystal 4.

The etalon 5 reflects a plurality of beams of light having different frequencies from each other and transmits a plurality of beams of light having different frequencies from each other, being given the converted signal light and the converted idler light from the first nonlinear crystal 4.

In the terahertz wave generating device illustrated in FIG. 1, the etalon 5 reflects a plurality of signal light beams having different frequencies from each other and transmits a plurality of signal light beams having different frequencies from each other as a plurality of light beams having different frequencies from each other.

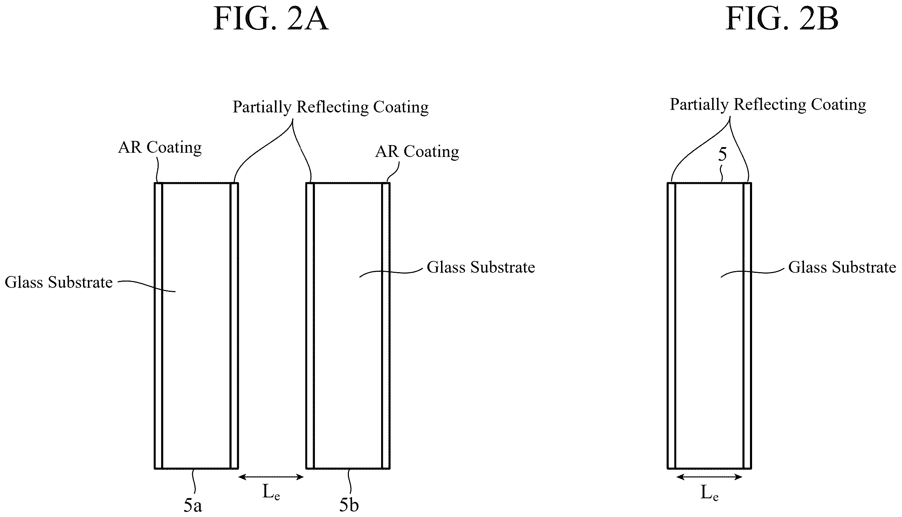

As illustrated in FIG. 2A, in the first partially reflecting mirror 5a, an antireflection film (hereinafter referred to as "AR coating") is applied onto one surface of a glass substrate, and partially reflecting coating is applied onto the other surface of the glass substrate. The one surface of the glass substrate is the surface facing the first nonlinear crystal 4, and the other surface of the glass substrate is the surface facing the second partially reflecting mirror 5b.

As illustrated in FIG. 2A, in the second partially reflecting mirror 5b, an AR coating is applied onto one surface of a glass substrate, and a partially reflecting coating is applied onto the other surface of the glass substrate. The one surface of the glass substrate of the second partially reflecting mirror 5b is the surface facing the second nonlinear crystal 6, and the other surface of the glass substrate of the second partially reflecting mirror 5b is the surface facing the first partially reflecting mirror 5a.

Each of the first partially reflecting mirror 5a and the second partially reflecting mirror 5b have partially reflective characteristics with respect to the wavelength band of the signal light, and may have any characteristics as the characteristics with respect to the wavelength band of the idler light. However, in a case where the optical parametric oscillator 2 is a resonator that resonates with both the signal light and the idler light, each of the first partially reflecting mirror 5a and the second partially reflecting mirror 5b, like the dichroic mirror 3, tends to be unstable unless the resonator length of the optical parametric oscillator 2 is precisely controlled. Therefore, it is easier to handle the idler light by transmitting the idler light. In view of this, in the terahertz wave generating device illustrated in FIG. 1, each of the first partially reflecting mirror 5a and the second partially reflecting mirror 5b transmits the idler light. In this case, the etalon 5 does not function as an etalon for the idler light.

The first partially reflecting mirror 5a and the second partially reflecting mirror 5b are arranged to face each other in such a manner that the surface of the first partially reflecting mirror 5a on which the partially reflecting coating is applied and the surface of the second partially reflecting mirror 5b on which the partially reflecting coating is applied are positioned close to each other.

The frequency difference between signal light beams among a plurality of signal light beams that are output from the optical parametric oscillator 2 is determined by the distance $L_e$ between the first partially reflecting mirror 5a and the second partially reflecting mirror 5b. The etalon 5 as illustrated in FIG. 2A is called an air-gap etalon.

As illustrated in FIG. 2B, the etalon 5 may have a partially reflecting coating to both surfaces of a glass substrate. The etalon 5 as illustrated in FIG. 2B is called a solid etalon.

In the case of the etalon 5 as illustrated in FIG. 2B, the frequency difference between signal light beams among a plurality of signal light beams that are output from the optical parametric oscillator 2 is determined by the thickness $L_e$ of the glass substrate.

Each of FIGS. 2A and 2B is an explanatory diagram illustrating an example configuration of the etalon 5.

The second nonlinear crystal 6 is formed with a lithium niobate crystal, or with a DAST crystal that is an organic crystal, for example.

The second nonlinear crystal 6 generates terahertz waves having a frequency corresponding to the frequency difference between signal light beams among the plurality of signal light beams transmitted through the etalon 5.

Note that the phase matching in the second nonlinear crystal 6 may be angle phase matching or quasi phase matching.

The frequency difference adjusting unit 7 includes a gap adjusting mechanism 8, a phase matching adjusting mechanism 9, and a control device 10.

The frequency difference adjusting unit 7 adjusts the etalon 5, to adjust the frequency difference between signal light beams among a plurality of signal light beams that are generated by the optical parametric oscillator 2.

In a case where the etalon 5 is an air-gap etalon as illustrated in FIG. 2A, the gap adjusting mechanism 8 is formed with a combination of a stepping motor and a linear motion stage, a piezoelectric element, or micro electro mechanical systems (MEMS), for example.

The gap adjusting mechanism 8 adjusts the gap between the first partially reflecting mirror 5a and the second partially reflecting mirror 5b, in accordance with a control signal from the control device 10.

In a case where the etalon 5 is a solid etalon as illustrated in FIG. 2B, the gap adjusting mechanism 8 is formed with a mechanism that adjusts the gap between both surfaces by adjusting temperature, adjusting a partial thickness, or rotating, for example. In this case, the gap adjusting mechanism 8 adjusts the gap between both surfaces, in accordance with a control signal from the control device 10.

The phase matching adjusting mechanism 9 adjusts the phase matching in the second nonlinear crystal 6, in accordance with a control signal from the control device 10.

For example, as illustrated in FIG. 3A, the phase matching adjusting mechanism 9 adjusts the phase matching in the second nonlinear crystal 6, by changing the angle of the second nonlinear crystal 6 with a rotating stage or the like. FIG. 3A is an explanatory diagram illustrating an example of the phase matching adjusting mechanism 9 that adjusts the phase matching in the second nonlinear crystal 6, by changing the angle of the second nonlinear crystal 6 with a rotating stage or the like.

Further, the phase matching adjusting mechanism 9 illustrated in FIG. 3B utilizes the temperature dependency of the refractive index of the second nonlinear crystal 6, and adjusts the phase matching in the second nonlinear crystal 6, by controlling the temperature of the second nonlinear crystal 6, as illustrated in FIG. 3B, for example. FIG. 3B is an explanatory diagram illustrating an example of the phase matching adjusting mechanism 9 that adjusts the phase matching in the second nonlinear crystal 6, by controlling the temperature of the second nonlinear crystal 6.

Further, in a case where the second nonlinear crystal 6 is a polarizationinverted crystal, and is a crystal that performs polarization inversion in such a manner that the inversion period thereof varies depending on positions at which light enters, the phase matching adjusting mechanism 9 illustrated in FIG. 3C changes the position at which the incident light enters with a linear motion stage, to adjust the phase matching in the second nonlinear crystal 6 in such a manner that the polarization inversion period sensed by incident light varies. FIG. 3C is an explanatory diagram illustrating an example of the phase matching adjusting mechanism 9 that adjusts the phase matching in the second nonlinear crystal 6, by changing the position at which incident light enters using a linear motion stage.

The control device 10 controls the gap adjustment by the gap adjusting mechanism 8 and the phase matching adjustment by the phase matching adjusting mechanism 9 in such a manner that the gap adjusting mechanism 8 and the phase matching adjusting mechanism 9 are synchronized.

Next, an operation of the terahertz wave generating device illustrated in FIG. 1 is described.

First, there is a relationship between the wavelength $\lambda$ and the frequency v of light as shown below in Expression (1). The wavelength herein indicates the wavelength in vacuum, and c represents the speed of light.

$$\lambda = \frac{c}{v} \qquad\qquad (1)$$

The pulsed light source 1 oscillates pulsed light, and outputs the pulsed light to the dichroic mirror 3 of the optical parametric oscillator 2.

When pulsed light is supplied from the pulsed light source 1, the dichroic mirror 3 transmits the pulsed light to the side of the first nonlinear crystal 4.

The dichroic mirror 3 reflects signal light from the first nonlinear crystal 4 to the side of the first nonlinear crystal 4, and transmits idler light from the first nonlinear crystal 4 to the side of the pulsed light source 1.

The first nonlinear crystal 4 converts the pulsed light transmitted through the dichroic mirror 3 into signal light and idler light.

According to the energy conservation law, there is a relationship between the wavelength $\lambda_p$ of the pulsed light transmitted through the dichroic mirror 3, the wavelength $\lambda_s$ of the signal light, and the wavelength $\lambda_i$ of the idler light as shown below in Expression (2).

The first nonlinear crystal 4 outputs the converted signal light and the converted idler light to the etalon 5.

$$\frac{1}{\lambda_p} = \frac{1}{\lambda_s} + \frac{1}{\lambda_i} \qquad\qquad (2)$$

The process of converting pulsed light, which is excitation light, into light having a longer wavelength than the excitation light with the first nonlinear crystal 4 is called an optical parametric process. The oscillator that resonates signal light by building a resonator around the first nonlinear crystal 4 is called an optical parametric oscillator.

There are an infinite number of combinations satisfying Expression (2), and the optical parametric oscillator 2 can oscillate only a single signal light beam with a combination of phase matching described later and a resonator condition, for example. Also, the optical parametric oscillator 2 can simultaneously oscillate signal light beams among a plurality of wavelengths.

In the terahertz wave generating device illustrated in FIG. 1, the signal light converted by the first nonlinear crystal 4 includes a plurality of wavelengths, and, for example, the signal light converted by the first nonlinear crystal 4 includes first signal light and second signal light.

Phase matching means that the sum of the wave number vector $k_s$ of the first signal light and the wave number vector $k_i$ of the idler light match the wave number vector $k_p$ of the pulsed light as shown below in Expression (3). Expression (3) is vectorially calculated.

In a case where the first nonlinear crystal 4 is formed with a quasi-phase-matched crystal such as a PPLN crystal, it is interpreted that the first nonlinear crystal 4 has a virtual wave number vector $k_g$ depending on the polarization inversion period, and accordingly, the phase matching is expressed as shown below in Expression (4).

$$k_p = k_s + k_i \qquad (3)$$

$$k_p = k_s + k_i + k_g \qquad (4)$$

The etalon 5 is given the converted signal light and the converted idler light from the first nonlinear crystal 4. Thus, the converted signal light and the converted idler light is given between the first partially reflecting mirror 5a and the second partially reflecting mirror 5b.

Because reflected light such as the signal light from the first partially reflecting mirror 5a and reflected light such as the signal light from the second partially reflecting mirror 5b interfere with each other, the power of the reflected light periodically generates a peak, and the second partially reflecting mirror 5b transmits reflected light having peaks.

The frequency interval between periodic peaks is called a free spectral range (FSR). In the terahertz wave generating device illustrated in FIG. 1, the FSR matches the frequency of terahertz waves.

In general, the transmittance T of an ideal etalon 5 is expressed as shown below in Expression (5) using the reflectance $R_1$ of the first partially reflecting mirror 5a and the reflectance $R_2$ of the second partially reflecting mirror 5b.

$$T = \frac{(1 - R_1)(1 - R_2)}{\left(1 - \sqrt{R_1 R_2}\right)^2 + 4\sqrt{R_1 R_2}\sin^2(\phi)} \qquad (5)$$

In Expression (5), $\varphi$ represents a one-way phase shift amount of the etalon 5, and is expressed as shown below in Expression (6).

$$\phi = 2\pi\upsilon\frac{nL_e}{c} \qquad (6)$$

In Expression (6), $L_e$ represents the distance between the first partially reflecting mirror 5a and the second partially reflecting mirror 5b, and n represents the refractive index of the space between the first partially reflecting mirror 5a and the second partially reflecting mirror 5b.

Accordingly, there is a possibility that the optical parametric oscillator 2 oscillates at a frequency having a high reflectance present in the FSR gap of the etalon 5.

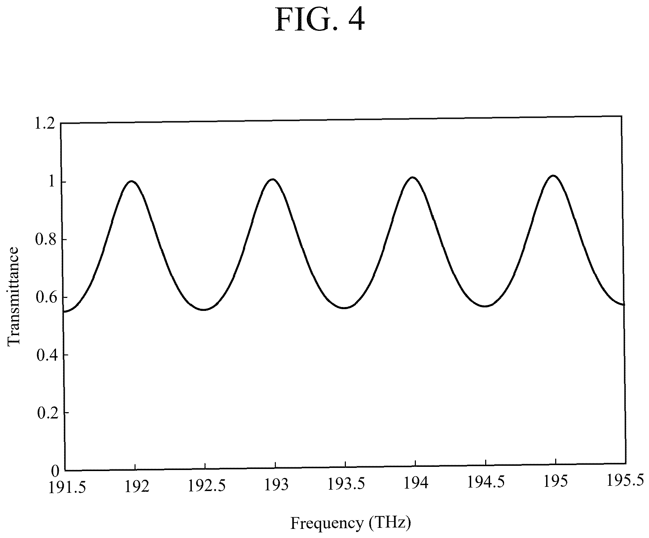

FIG. 4 is an explanatory diagram showing the transmittance of the etalon 5, where $R_1 = R_2 = 0.15$, $L_e = 150$ μm, and n = 1.0. In FIG. 4, the horizontal axis indicates frequency, and the vertical axis indicates transmittance.

In the example in FIG. 4, the power of reflected light generates peaks at frequency intervals of 1 THz, and signal light is transmitted at frequency intervals of 1 THz. Accordingly, in the example in FIG. 4, the FSR is 1 THz.

The FSR is determined by the distance $L_e$ between the first partially reflecting mirror 5a and the second partially reflecting mirror 5b as shown below in Expression (7). As can be seen from the fact that the FSR of the etalon 5 is 1 THz in the example in FIG. 4, the optical parametric oscillator 2 strongly confines light at frequency intervals of 1 THz at which the reflectance of the etalon 5 is high.

$$\upsilon_{FSR} = \frac{c}{2nL_e} \qquad (7)$$

In Expression (7), $\upsilon_{FSR}$ represents the value of the FSR.

Here, the Q factor is expressed by Expression (8) shown below.

In Expression (8), $T_{rt}$ represents the time required for light to reciprocate between the resonator and the etalon 5, and 1 represents the optical loss generated while light reciprocates between the resonator and the etalon 5. As can be seen from Expression (8), the Q factor is proportional to the reciprocal of the internal loss.

In the etalon 5 illustrated in FIG. 4, the minimum transmittance is about 54.6%. Since the optical parametric oscillator 2 uses the etalon 5 as an output mirror, the transmittance of the etalon 5 is regarded as the calculation loss of the Q factor when viewed from the optical parametric oscillator 2. On the assumption that the loss of the optical elements other than the etalon 5 in the optical parametric oscillator 2 is small enough, the internal loss in a case where the etalon 5 illustrated in FIG. 4 is used is about 54.6%.

Meanwhile, Non-Patent Literature 1 discloses that the mirror forming a resonator is 99% or higher. In such a high-Q-factor design, if the angle of the mirror deviates from an ideal angle due to the influence of vibration, thermal expansion, or the like, the loss in the resonator greatly changes. Because of this, the terahertz wave generating device disclosed in Non-Patent Literature 1 is vulnerable to environmental changes such as changes in vibration or temperature.

$$Q = \frac{2\pi\nu T_{rt}}{l} \qquad (8)$$

In the first nonlinear crystal 4, phase matching is important, but wavelength conversion can be performed even if phase matching has a slight deviation.

A phase mismatch amount $\Delta k$ is expressed as shown below in Expression (9) or Expression (10). Expression (10) represents a case of quasi phase matching.

In the optical parametric process, where the length of the first nonlinear crystal 4 in the optical axis direction is represented by $L_e$, inverse conversion from signal light to excitation light occurs in a case where $\Delta k L_c$ exceeds $\pm\pi/2$. Accordingly, if Expression (11) shown below is satisfied, wavelength conversion is performed without any problem in the first nonlinear crystal 4.

$$\Delta k = k_p - (k_s + k_i) \qquad (9)$$

$$\Delta k = k_p - (k_s + k_i + k_g) \qquad (10)$$

$$|\Delta k| L_c < \frac{\pi}{2} \qquad (11)$$

In the terahertz wave generating device illustrated in FIG. 1, the optical parametric oscillator 2 uses the first nonlinear crystal 4 capable of highly efficiently performing wavelength conversion over a band of several THz. Such a nonlinear crystal may be a crystal having a short length in the optical axis direction, for example. Also, such a nonlinear crystal includes a plurality of slices of crystal having different cut angles from each other, and a quasi-phase-matched crystal in which the polarization inversion period gradually changes may be considered.

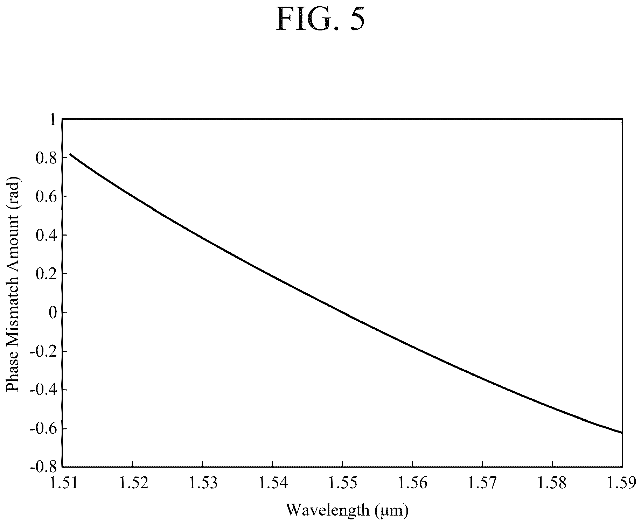

FIG. 5 is an explanatory diagram showing the phase mismatch amount in a case where a $\beta$-barium borate (BBO) crystal in which phase matching is achieved with excitation light of 1064 nm and signal light of 1550 nm is used as the first nonlinear crystal 4, the cut angle of the BBO crystal is 25.75 degrees, and the crystal length is represented by $L_c$. In FIG. 5, the horizontal axis indicates wavelength, and the vertical axis indicates phase mismatch amount.

In FIG. 5, 1.51 $\mu$m to 1.59 $\mu$m are about 10 THz in terms of frequency, and it can be seen that the phase mismatch amount is substantially within $\pm\pi/2$ in the band of about 10 THz. Accordingly, a thin crystal having a thickness of 0.1 mm is used, for example, so that phase matching can be achieved in a region exceeding several THz.

In the terahertz wave generating device illustrated in FIG. 1, the optical parametric oscillator 2 includes the first nonlinear crystal 4 in which phase matching can be achieved in a wide band over several THz, and the etalon 5 that exhibits high reflectance with a plurality of light beams that have different frequencies from each other but have constant frequency intervals. Accordingly, the optical parametric oscillator 2 can simultaneously oscillate a plurality of signal light beams for generating terahertz waves having a desired frequency.

In a case where the desired frequency of terahertz waves has been determined, the distance $L_e$ between the first partially reflecting mirror 5a and the second partially reflecting mirror 5b may be determined depending on the frequency of the terahertz waves.

In a case where the signal light beams to be simultaneously oscillated by the optical parametric oscillator 2 include third signal light and fourth signal light in addition to the first signal light and the second signal light, for example, each of the frequency intervals among those signal light beams is also determined by the distance $L_e$ between the first partially reflecting mirror 5a and the second partially reflecting mirror 5b. Further, each of the frequency intervals among those signal light beams matches the FSR. Accordingly, even when the first signal light, the second signal light, the third signal light, and the fourth signal light are simultaneously oscillated from the optical parametric oscillator 2, terahertz waves are generated without any energy loss.

Note that the optical parametric oscillator 2 is a resonator. Therefore, to satisfy the resonance condition, the dichroic mirror 3 may have a curvature, or a lens may be inserted into the resonator.

In the terahertz wave generating device illustrated in FIG. 1, the pulsed light to be oscillated from the pulsed light source 1 is a short pulse of 1 nanosecond or less. In view of this, the resonator life of the optical parametric oscillator 2 needs to be equal to or shorter than the pulse width of the pulsed light to be oscillated from the pulsed light source 1. Where the optical length of one cycle of the resonator is represented by OL, and the peak reflectance of the etalon 5 is represented by $R_c$, the resonator life $\tau_e$ is expressed as shown below in Expression (12).

$$\tau_c = \frac{OL}{c}\frac{1}{1 - R_e} \qquad (1\ 2)$$

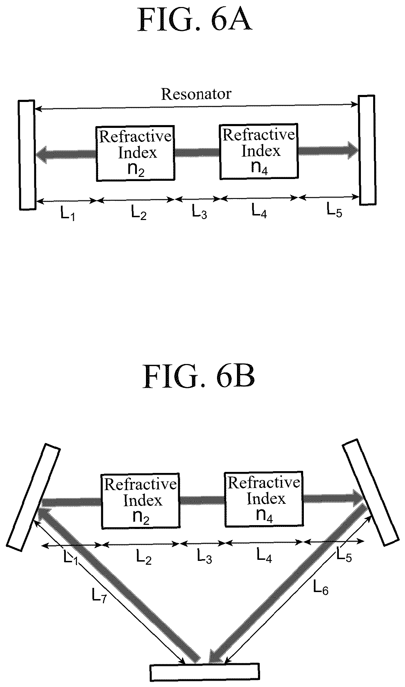

The optical length OL indicates the distance that light travels in a vacuum during the time in which light travels in a certain medium. For example, in the case of a resonator as illustrated in FIG. 6A, the optical length OL is expressed as shown below in Expression (13).

Further, in the case of a ring resonator as illustrated in FIG. 6B, for example, the optical length OL is expressed as shown below in Expression (14).

Each of FIGS. 6A and 6B is an explanatory diagram illustrating an example of the resonator.

Where the refractive index of air is 1, and $R_e = 0.5$, for example, the optical length of the resonator needs to be 15 cm, to set the resonator life to one nanosecond.

$$OL = 2(L_1 + n_2L_2 + L_3 + n_4L_4 + L_5) \qquad (1\ 3)$$

$$OL = L_1 + n_2L_2 + L_3 + n_4L_4 + L_5 + L_6 + L_7 \qquad (1\ 4)$$

The control device 10 controls the gap adjustment by the gap adjusting mechanism 8 and the phase matching adjustment by the phase matching adjusting mechanism 9 in such a manner that the gap adjusting mechanism 8 and the phase matching adjusting mechanism 9 are synchronized.

The gap adjusting mechanism 8 adjusts the distance $L_e$ between the first partially reflecting mirror 5a and the second partially reflecting mirror 5b, in accordance with a control signal from the control device 10.

As the distance $L_e$ is adjusted by the gap adjusting mechanism 8, $\nu_{FSR}$, which is the value of the FSR, changes as shown in Expression (7). Since the first nonlinear crystal 4 has a sufficiently wide band as described above, the gap adjusting mechanism 8 can adjust the distance $L_e$, to change each of the frequency intervals among the first signal light, the second signal light, the third signal light, and the fourth signal light, for example.

The etalon 5 can narrow the line width of the transparent wavelength, regardless of whether the Q factor of the optical parametric oscillator 2 is set to a high Q factor. That is, the etalon 5 can output signal light having two narrow line widths to the second nonlinear crystal 6, regardless of whether the Q factor of the optical parametric oscillator 2 is set to a high Q factor. Accordingly, the Q factor of the optical parametric oscillator 2 does not need to be set to a high Q factor.

The phase matching adjusting mechanism 9 adjusts the phase matching in the second nonlinear crystal 6, in accordance with a control signal from the control device 10.

That is, the phase matching adjusting mechanism 9 adjusts the phase matching in the second nonlinear crystal 6, depending on a change in the FSR.

In many cases, the refractive index change observed when the frequency of terahertz waves changes from the order of GHz to the order of THz is larger than the refractive index change observed when signal light changes in frequency from the order of GHz to the order of THz. Because of this, the phase matching adjusting mechanism 9 needs to adjust the phase matching in the second nonlinear crystal 6, depending on the desired frequency of terahertz waves.

In the first embodiment described above, the terahertz wave generating device is designed in such a manner as to include: the pulsed light source 1 that outputs pulsed light; the first nonlinear crystal 4 that converts the pulsed light output from the pulsed light source 1 into signal light and idler light, and outputs the converted signal light and the converted idler light; the etalon 5 that transmits a plurality of light beams having frequencies different from each other, having been given the converted signal light and the converted idler light from the first nonlinear crystal 4; and the second nonlinear crystal 6 that generates terahertz waves having a frequency corresponding to a frequency difference between light beams among the plurality of light beams transmitted through the etalon 5. Thus, a terahertz wave generating device that is more resistant to environmental changes than the terahertz wave generating device disclosed in Non-Patent Literature 1 can be obtained.

Second Embodiment

In a second embodiment, a terahertz wave generating device in which a supersaturated absorber 11 is disposed between a first nonlinear crystal 4 and an etalon 5 is described.

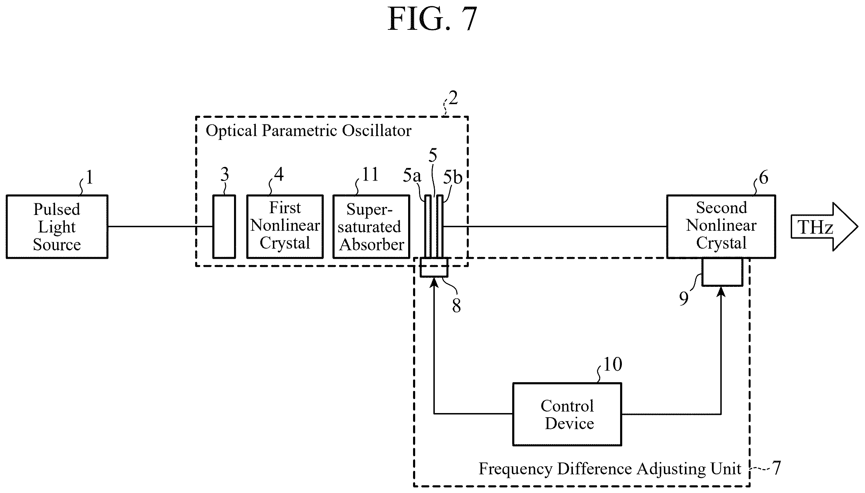

FIG. 7 is a configuration diagram showing the terahertz wave generating device according to the second embodiment. In FIG. 7, the same reference numerals as those in FIG. 1 denote the same or corresponding components, and therefore, detailed explanation of them is not made herein.

The terahertz wave generating device shown in FIG. 7 includes a pulsed light source 1, an optical parametric oscillator 2, a second nonlinear crystal 6, and a frequency difference adjusting unit 7.

The optical parametric oscillator 2 includes a dichroic mirror 3, the first nonlinear crystal 4, the supersaturated absorber 11, and the etalon 5.

The supersaturated absorber 11 is formed with a chromium-doped yttrium aluminum garnet laser (Cr: YAG) crystal, a semiconductor, or carbon nanotubes.

In a case where the signal light converted by the first nonlinear crystal 4 includes first signal light, second signal light, and third signal light, for example, the supersaturated absorber 11 functions in such a manner that the phase of the first signal light, the phase of the second signal light, and the phase of the third signal light are aligned.

Next, an operation of the terahertz wave generating device illustrated in FIG. 7 is described. However, the operation is similar to that of the terahertz wave generating device illustrated in FIG. 1 except for the supersaturated absorber 11, and therefore, only an operation of the supersaturated absorber 11 is described herein.

The signal light converted by the first nonlinear crystal 4 includes the first signal light, the second signal light, and the third signal light, for example.

At this point of time, among the first signal light, the second signal light, and the third signal light, the frequency of the first signal light is the lowest, the frequency of the second signal light is the second lowest, and the frequency of the third signal light is the highest.

In this case, the difference between the phase of the first signal light and the phase of the second signal light is the phase of terahertz waves having the frequency corresponding to the frequency difference between the first signal light and the second signal light (the terahertz waves will be hereinafter referred to as the "first terahertz waves"). Also, the difference between the phase of the second signal light and the phase of the third signal light is the phase of terahertz waves having the frequency corresponding to the frequency difference between the second signal light and the third signal light (the terahertz waves will be hereinafter referred to as the "second terahertz waves").

Accordingly, when the phase of the first signal light, the phase of the second signal light, and the phase of the third signal light are aligned, the phase of the first terahertz waves and the phase of the second terahertz waves are aligned.

Since the supersaturated absorber 11 functions in such a manner that the phase of the first signal light, the phase of the second signal light, and the phase of the third signal light are aligned, the phase of the first terahertz waves and the phase of the second terahertz waves generated by second nonlinear crystal 6 are aligned.

In the second embodiment described above, the terahertz wave generating device illustrated in FIG. 7 is designed in such a manner that the supersaturated absorber 11 is disposed between the first nonlinear crystal 4 and the etalon 5. Thus, a terahertz wave generating device that is more resistant to environmental changes than the terahertz wave generating device disclosed in Non-Patent Literature 1 can be obtained. Also, the terahertz wave generating device illustrated in FIG. 7 can efficiently generate terahertz waves.

Third Embodiment

In the terahertz wave generating device illustrated in FIG. 1 and the terahertz wave generating device illustrated in FIG. 7, the etalon 5 is disposed perpendicularly to the optical axis, and the etalon 5 functions as an output mirror of the optical parametric oscillator 2.

In a third embodiment, a terahertz wave generating device in which an etalon 5 is disposed so as to be inclined with respect to a direction perpendicular to the optical axis is described.

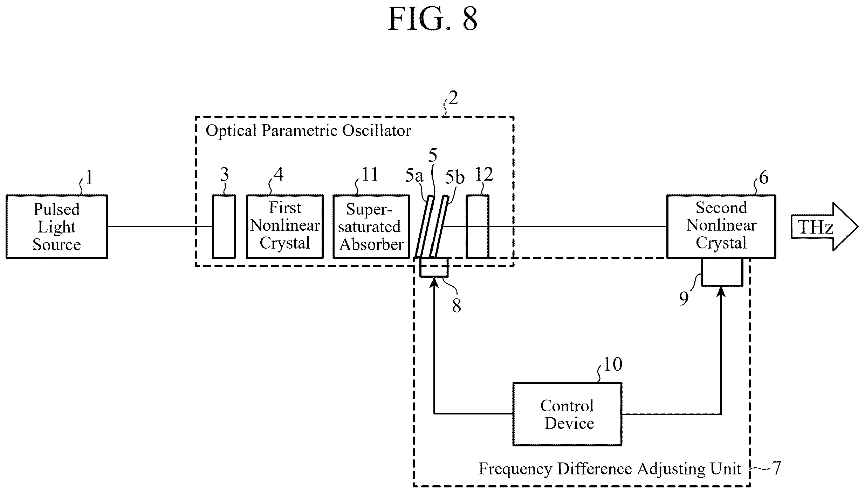

FIG. 8 is a configuration diagram showing the terahertz wave generating device according to the third embodiment. In FIG. 8, the same reference numerals as those in FIG. 1 and FIG. 7 denote the same or corresponding components, and therefore, detailed explanation of them is not made herein.

The terahertz wave generating device shown in FIG. 8 includes a pulsed light source 1, an optical parametric oscillator 2, a second nonlinear crystal 6, and a frequency difference adjusting unit 7.

In the terahertz wave generating device shown in FIG. 8, the optical parametric oscillator 2 includes a dichroic mirror 3, a first nonlinear crystal 4, a supersaturated absorber 11, an etalon 5, and an output mirror 12. However, this is merely an example, and the optical parametric oscillator 2 does not necessarily include the supersaturated absorber 11 as illustrated in FIG. 1.

In the terahertz wave generating device shown in FIG. 8, the etalon 5 is disposed so as to be inclined with respect to a direction perpendicular to the optical axis.

The output mirror 12 is a partially reflecting mirror having a constant reflectance in the wavelength band of signal light.

The optimum reflectance of the output mirror 12 is determined by internal loss of the optical parametric oscillator 2.

Normally, the etalon 5 can narrow the line width of the transparent wavelength, but it is difficult to narrow the line width of the reflection wavelength. As is apparent from Expression (5), the reflectance $R_1$ of the first partially reflecting mirror 5a and the reflectance $R_2$ of the second partially reflecting mirror 5b are brought close to 1, so that the line width of the transparent wavelength can be made a narrow line width.

Accordingly, the etalon 5 from which $\nu_{FSR}$ shown in Expression (7) is obtained is inserted as a transmissive filter into the optical parametric oscillator 2, so that a plurality of signal light beams from which frequency intervals of $\nu_{FSR}$ are obtained can be oscillated. Further, by narrowing the line width of the transparent wavelength of the etalon 5, it is possible to narrow the line width of signal light generated from the optical parametric oscillator 2.

The plurality of the signal light beams having the line width narrowed generates terahertz waves having a frequency corresponding to the frequency difference between signal light beams among the plurality of signal light beams in the second nonlinear crystal 6. At this point of time, since the line width of the plurality of signal light beams has been narrowed, the line width of the terahertz waves to be generated from the second nonlinear crystal 6 can be narrowed. As the line width of terahertz waves is narrow, the phase mismatch within the line width of the terahertz waves generated from the second nonlinear crystal 6 is reduced, and terahertz waves can be efficiently generated.

Fourth Embodiment

In the terahertz wave generating device illustrated in FIG. 1, the terahertz wave generating device illustrated in FIG. 7, and the terahertz wave generating device illustrated in FIG. 8, the second nonlinear crystal 6 generates terahertz waves having a frequency corresponding to the frequency difference between signal light beams among a plurality of signal light beams transmitted through the etalon 5. However, this is merely an example, and the second nonlinear crystal 6 may generate terahertz waves having a frequency corresponding to the frequency difference between idler light beams among a plurality of idler light beams transmitted through the etalon 5.

The configuration of a terahertz wave generating device according to a fourth embodiment is similar to the configuration of the terahertz wave generating device illustrated in FIG. 1, the configuration of the terahertz wave generating device illustrated in FIG. 7, or the configuration of the terahertz wave generating device illustrated in FIG. 8.

In the terahertz wave generating device according to the fourth embodiment, pulsed light that is output from a pulsed light source 1 needs to be laser light of a single wavelength. Therefore, the pulsed light source 1 is a single-wavelength light source.

From Expression (1) and Expression (2), the frequency $\nu_i$ of idler light that is light generated from an optical parametric oscillator 2 is expressed by the following Expression (15).

$$\nu_i = \nu_p - \nu_s \qquad\qquad (15)$$

In Expression (15), $\nu_p$ represents the frequency of pulsed light, and $\nu_s$ represents the frequency of signal light.

In a case where the pulsed light is laser light of a single wavelength, when a plurality of signal light beams is to be generated at frequency intervals of $\nu_{FSR}$ by the optical parametric oscillator 2, a plurality of idler light beams is generated at frequency intervals of $\nu_{FSR}$ by the optical parametric oscillator 2.

The optical parametric oscillator 2 gives the second nonlinear crystal 6 a plurality of idler lights, instead of a plurality of signal lights.

The second nonlinear crystal 6 generates terahertz waves having a frequency corresponding to the frequency difference between idler light beams among the plurality of idler light beams transmitted through the etalon 5.

In the fourth embodiment described above, a terahertz wave generating device is designed in such a manner as to include: the pulsed light source 1 that outputs pulsed light; the first nonlinear crystal 4 that converts the pulsed light output from the pulsed light source 1 into signal light and idler light, and outputs the converted signal light and the converted idler light; the etalon 5 that transmits a plurality of idler light beams having frequencies different from each other, having been given the converted signal light and the converted idler light from the first nonlinear crystal 4; and the second nonlinear crystal 6 that generates terahertz waves having a frequency corresponding to a frequency difference between idler light beams among the plurality of light beams transmitted through the etalon 5. Thus, a terahertz wave generating device that is more resistant to environmental changes than the terahertz wave generating device disclosed in Non-Patent Literature 1 can be obtained.

An advantage to be achieved by the terahertz wave generating device generating terahertz waves not from a plurality of signal light beams but from a plurality of idler light beams is to be able to strengthen the confinement of signal light. The stronger the confinement of signal light, the smaller the influence on the outside of the terahertz wave generating device and the like.

Since idler light is not generated without both signal light and excitation light, there also is an advantage that the pulse width of idler light is shortened.

Fifth Embodiment

In a fifth embodiment, a terahertz wave generating device in which an optical parametric oscillator 2 includes a dichroic mirror 3, a first nonlinear crystal 4, and an output mirror 13 is described.

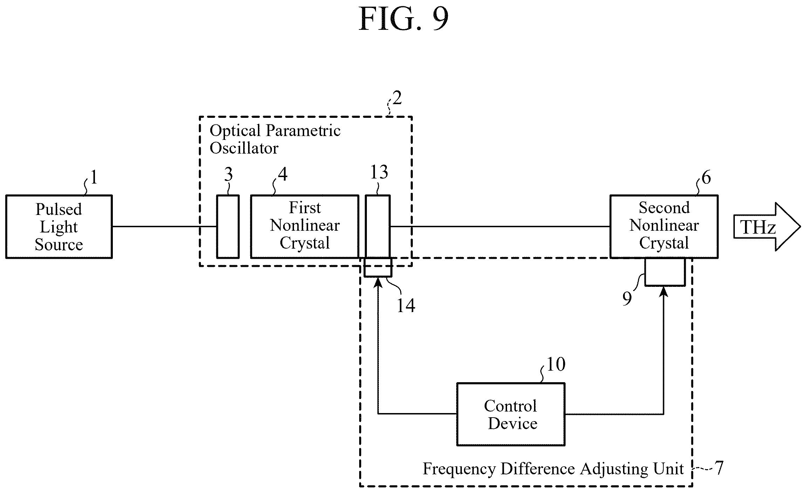

FIG. 9 is a configuration diagram showing a terahertz wave generating device according to the fifth embodiment. In FIG. 9, the same reference numerals as those in FIG. 1, FIG. 7, and FIG. 8 denote the same or corresponding components, and therefore, detailed explanation of them is not made herein.

The terahertz wave generating device shown in FIG. 9 includes a pulsed light source 1, an optical parametric oscillator 2, a second nonlinear crystal 6, and a frequency difference adjusting unit 7.

In the terahertz wave generating device shown in FIG. 9, the optical parametric oscillator 2 includes the dichroic mirror 3, the first nonlinear crystal 4, and the output mirror 13.

The output mirror 13 transmits or reflects the converted signal light and the converted idler light output from the first nonlinear crystal 4, with a certain reflectance. As a result, the converted signal light reciprocates between the dichroic mirror 3 and the output mirror 13. Further, the converted signal light includes a plurality of light beams having any frequency among a plurality of frequencies corresponding to the intervals of the FSR calculated from the optical length of the reciprocating path.

Accordingly, the converted signal light and the converted idler light are given from the first nonlinear crystal 4, so that the output mirror 13 outputs a plurality of signal light beams as a plurality of light beams having different frequencies from each other to the second nonlinear crystal 6.

The frequency difference adjusting unit 7 includes a gap adjusting mechanism 14, a phase matching adjusting mechanism 9, and a control device 10.

The frequency difference adjusting unit 7 adjusts the frequency difference between light beams among the plurality of light beams output from the output mirror 13.

The gap adjusting mechanism 14 is formed with a combination of a stepping motor and a linear motion stage, for example.

The gap adjusting mechanism 14 adjusts the distance between the first nonlinear crystal 4 and the output mirror 13, by moving the output mirror 13 in the optical axis direction in accordance with a control signal from the control device 10.

In the terahertz wave generating device illustrated in FIG. 9, $\nu_{FSR}$', which is the value of an interval FSR between periodic peaks generated in the optical parametric oscillator 2, is calculated on the basis of the optical length OL' observed when the signal light comes in one cycle in the resonator of the optical parametric oscillator 2, as shown below in Expression (16). The optical length OL' is a length taking into account the refractive index.

In the terahertz wave generating device illustrated in FIG. 9, $\nu_{FSR}$' is set in such a manner that the frequency of terahertz waves to be generated by the second nonlinear crystal 6 is the desired frequency.

$$v_{FSR}' = \frac{c}{OL'} \qquad (16)$$

With the FSR of the terahertz wave generating device illustrated in FIG. 9, each of the dichroic mirror 3 and the output mirror 13 is installed separately from the first nonlinear crystal 4. The first nonlinear crystal 4 is provided with an AR coating to prevent reflection.

The gap adjusting mechanism 14 can adjust the distance between the first nonlinear crystal 4 and the output mirror 13, by moving the output mirror 13 in the optical axis direction in accordance with a control signal from the control device 10. As the distance between the first nonlinear crystal 4 and the output mirror 13 is adjusted, the optical length OL' of the resonator is adjusted.

The first nonlinear crystal 4 may be coated directly with each of the dichroic mirror 3 and the output mirror 13. In this case, however, the first nonlinear crystal 4 is a nonlinear crystal having a crystal length different for each site, for example, and the gap adjusting mechanism 14 is a gap adjusting mechanism capable of adjusting the site to be used with a linear motion stage or the like.

The frequency intervals among a plurality of signal light beams oscillated by the optical parametric oscillator 2 are $\nu_{FSR}$'. Further, in a case where the frequency intervals $\nu_{FSR}$' are on the order of THz, the resonator length OL' is about 100 $\mu$m to several hundreds of $\mu$m. Because the thickness of the first nonlinear crystal 4 is smaller than the resonator length OL', the first nonlinear crystal 4 is a thin crystal. As a result, the phase mismatch amount is small over a wide band, and thus, the first nonlinear crystal 4 can generate signal light of several THz. Accordingly, the optical parametric oscillator 2 can emit a plurality of signal light beams at frequency intervals of $\nu_{FSR}$'.

The output mirror 13 has a high reflectance in the wavelength band of the signal light, and the wavelength band of the idler light can be set to a high transmittance. Accordingly, the optical parametric oscillator 2 can emit a plurality of idler light beams at frequency intervals of $\nu_{FSR}$'. With the use of such an output mirror 13, the intensity of the signal light inside the resonator can be increased. With the use of the thin first nonlinear crystal 4, a high conversion efficiency from excitation light to idler light can be expected.

In this case, the second nonlinear crystal 6 generates terahertz waves having a frequency corresponding to the frequency difference between idler light beams among the plurality of idler light beams that are output from the output mirror 13.

In the fifth embodiment described above, the terahertz wave generating device is designed in such a manner as to include: the pulsed light source 1 that outputs pulsed light; the dichroic mirror 3 that transmits the pulsed light output from the pulsed light source 1, and reflects signal light; the first nonlinear crystal 4 that converts the pulsed light transmitted through the dichroic mirror 3 into signal light and idler light, and outputs the converted signal light and the converted idler light; and the output mirror 13 that transmits or reflects the converted signal light and the converted idler light output from the first nonlinear crystal 4, with a certain reflectance. The converted signal light reciprocates between the dichroic mirror 3 and the output mirror 13, and includes a plurality of light beams having any frequency among a plurality of frequencies corresponding to the intervals of the FSR calculated from the optical length of the reciprocating path. Further, the terahertz wave generating device includes the second nonlinear crystal 6 that generates terahertz waves having a frequency corresponding to the frequency difference between light beams among the plurality of light beams that are output from the output mirror 13. Thus, a terahertz wave generating device that is more resistant to environmental changes than the terahertz wave generating device disclosed in Non-Patent Literature 1 can be obtained.

Note that, in the present disclosure, it is possible to freely combine the respective embodiments, modify any of the components of each of the embodiments, or omit any of the components in each of the embodiments.

## INDUSTRIAL APPLICABILITY

The present disclosure is suitable for a terahertz wave generating device.

## REFERENCE SIGNS LIST

1: pulsed light source, 2: optical parametric oscillator, 3: dichroic mirror, 4: first nonlinear crystal, 5: etalon, 5a: first partially reflecting mirror, 5b: second partially reflecting mirror, 6: second nonlinear crystal, 7: frequency difference adjusting unit, 8: gap adjusting mechanism, 9: phase matching adjusting mechanism, 10: control device, 11: supersaturated absorber, 12: output mirror, 13: output mirror, 14: gap adjusting mechanism

## Claims

1. A terahertz wave generating device comprising:

   a pulsed light source to output pulsed light;
   a first nonlinear crystal to convert the pulsed light output from the pulsed light source into signal light and idler light, and output the signal light and the idler light;
   an etalon to transmit a plurality of light beams having frequencies different from each other when receiving the signal light and the idler light from the first nonlinear crystal; and
   a second nonlinear crystal to generate a terahertz wave having a frequency corresponding to a frequency difference between light beams among the plurality of light beams transmitted through the etalon.

2. The terahertz wave generating device according to claim 1, further comprising a frequency difference adjusting unit to adjust the frequency difference between the light beams among the plurality of light beams transmitted through the etalon.

3. The terahertz wave generating device according to claim 1, wherein

the etalon includes a first partially reflecting mirror and a second partially reflecting mirror to resonate the signal light output from the first nonlinear crystal, and

the frequency difference between the light beams among the plurality of light beams is determined in accordance with a distance between the first partially reflecting mirror and the second partially reflecting mirror.

4. The terahertz wave generating device according to claim 3, wherein
the frequency difference adjusting unit includes:

a gap adjusting mechanism to perform adjustment of the distance between the first partially reflecting mirror and the second partially reflecting mirror; and

a control device to control the adjustment of the distance performed by the gap adjusting mechanism.

5. The terahertz wave generating device according to claim 4, wherein

the frequency difference adjusting unit further includes
a phase matching adjusting mechanism to perform adjustment of phase matching of the second nonlinear crystal, and

the control device controls the adjustment of the phase matching performed by the phase matching adjusting mechanism, in addition to the adjustment of the distance performed by the gap adjusting mechanism.

6. The terahertz wave generating device according to claim 5, wherein
the control device controls the adjustment of the distance performed by the gap adjusting mechanism to set a frequency of the terahertz wave to be generated by the second nonlinear crystal to a desired frequency.

7. The terahertz wave generating device according to claim 1, wherein a supersaturated absorber is disposed between the first nonlinear crystal and the etalon.

8. The terahertz wave generating device according to claim 1, wherein
the pulsed light source is a single-wavelength light source to output pulsed light of a single wavelength.

9. A terahertz wave generating device comprising:

a pulsed light source to output pulsed light;

a dichroic mirror to transmit the pulsed light output from the pulsed light source and reflects signal light;

a first nonlinear crystal to convert the pulsed light transmitted through the dichroic mirror into signal light and idler light, and outputs the signal light and the idler light; and

an output mirror to transmit or reflect the signal light and the idler light output from the first nonlinear crystal with a certain reflectance, wherein

the signal light reciprocates to form a reciprocation path between the dichroic mirror and the output mirror, and includes a plurality of light beams having a frequency among a plurality of frequencies corresponding to a free spectral range (FSR) interval calculated based on an optical length of the reciprocation path, and

the terahertz wave generating device further comprises a second nonlinear crystal to generate a terahertz wave having a frequency corresponding to a frequency difference between light beams among the plurality of light beams output from the output mirror.

10. The terahertz wave generating device according to claim 9, wherein the dichroic mirror and the output mirror are coated with the first nonlinear crystal.

11. The terahertz wave generating device according to claim 9, further comprising a frequency difference adjusting unit to adjust the frequency difference between light beams among the plurality of light beams output from the output mirror.

12. The terahertz wave generating device according to claim 11, wherein
the frequency difference adjusting unit includes:

a gap adjusting mechanism to perform adjustment of a distance between the first nonlinear crystal and the output mirror; and

a control device to control the adjustment of the distance performed by the gap adjusting mechanism.

**13.** The terahertz wave generating device according to claim 12, wherein

the frequency difference adjusting unit further includes
a phase matching adjusting mechanism to perform adjustment of phase matching of the second nonlinear crystal, and
the control device controls the adjustment of the phase matching performed by the phase matching adjusting mechanism in addition to the adjustment of the distance performed by the gap adjusting mechanism.

# FIG. 1

# FIG. 2A

Partially Reflecting Coating

AR Coating                    AR Coating

Glass Substrate                    Glass Substrate

$L_e$

5a        5b

# FIG. 2B

Partially Reflecting Coating

5

Glass Substrate

$L_e$

EP 4 700 468 A1

# FIG. 3A

6

# FIG. 3B

6

Temperature
Adjustment

# FIG. 3C

6

# FIG. 4

# FIG. 5

# FIG. 6A

Resonator

Refractive Index $n_2$

Refractive Index $n_4$

$L_1$ $L_2$ $L_3$ $L_4$ $L_5$

# FIG. 6B

Refractive Index $n_2$

Refractive Index $n_4$

$L_1$ $L_2$ $L_3$ $L_4$ $L_5$

$L_7$ $L_6$

# FIG. 7

Pulsed Light Source (1) → Optical Parametric Oscillator (2) [First Nonlinear Crystal (4), Super-saturated Absorber (11), (3), (5) 5a 5b] → Second Nonlinear Crystal (6) → THz

Frequency Difference Adjusting Unit (7): Control Device (10), (8), (9)

EP 4 700 468 A1

# FIG. 8

# FIG. 9

## INTERNATIONAL SEARCH REPORT

| | International application No. |
|---|---|
| | **PCT/JP2023/019036** |

**A. CLASSIFICATION OF SUBJECT MATTER**

*G02F 1/39*(2006.01)i
FI: G02F1/39

According to International Patent Classification (IPC) or to both national classification and IPC

**B. FIELDS SEARCHED**

Minimum documentation searched (classification system followed by classification symbols)

G02F1/00-1/125; G02F1/21-7/00; G01N21/00-21/01; G01N21/17-21/61; H01S3/00-4/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-134575 A (ARKRAY, INC.) 24 July 2014 (2014-07-24) paragraphs [0027]-[0045], fig. 1-3 | 1-13 |
| A | JP 2002-535698 A (HERMAN, Gregory, S.) 22 October 2002 (2002-10-22) entire text, all drawings | 1-13 |
| A | JP 2020-516961 A (UNIVERSITY OF CENTRAL FLORIDA RESEARCH FOUNDATION, INC.) 11 June 2020 (2020-06-11) entire text, all drawings | 1-13 |
| A | US 6751010 B1 (ITT MANUFACTURING ENTERPRISES, INC.) 15 June 2004 (2004-06-15) entire text, all drawings | 1-13 |
| A | US 2018/0337508 A1 (THE PENN STATE RESEARCH FOUNDATION) 22 November 2018 (2018-11-22) entire text, all drawings | 1-13 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2023/019036** |

### C. DOCUMENTS CONSIDERED TO BE RELEVANT

| Category* | Citation of document, with indication, where appropriate, of the relevant passages | Relevant to claim No. |
|---|---|---|
| A | CN 111262122 A (NANJING IOPTEE ADVANCED PHOTOELECTRIC INTEGRATION TECHNOLOGY RESEARCH INSTITUTE CO., LTD.) 09 June 2020 (2020-06-09) entire text, all drawings | 1-13 |

Form PCT/ISA/210 (second sheet) (January 2015)

## INTERNATIONAL SEARCH REPORT
### Information on patent family members

International application No.

**PCT/JP2023/019036**

| Patent document cited in search report | | | Publication date (day/month/year) | Patent family member(s) | | | Publication date (day/month/year) |
|---|---|---|---|---|---|---|---|
| JP | 2014-134575 | A | 24 July 2014 | US | 2014/0191131 | A1 | |
| | | | | paragraphs [0040]-[0058], fig. 1-3 | | | |
| JP | 2002-535698 | A | 22 October 2002 | US | 6144679 | A | |
| | | | | entire text, all drawings | | | |
| | | | | WO | 2000/042468 | A1 | |
| | | | | AU | 3209100 | A | |
| | | | | CA | 2397678 | A1 | |
| JP | 2020-516961 | A | 11 June 2020 | US | 2021/0124236 | A1 | |
| | | | | entire text, all drawings | | | |
| | | | | WO | 2018/195128 | A1 | |
| | | | | CN | 110546565 | A | |
| | | | | KR | 10-2019-0139946 | A | |
| US | 6751010 | B1 | 15 June 2004 | (Family: none) | | | |
| US | 2018/0337508 | A1 | 22 November 2018 | (Family: none) | | | |
| CN | 111262122 | A | 09 June 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. MIYAMOTO et al.** Optimized terahertz-wave generation using BNA-DFG. *Opt. Express*, August 2009, vol. 17, 14832